(19) **Europäisches Patentamt**
**European Patent Office**
**Office européen des brevets**

(11) **EP 2 202 538 B1**

(12) **FASCICULE DE BREVET EUROPEEN**

(45) Date de publication et mention
de la délivrance du brevet:
**15.08.2012 Bulletin 2012/33**

(51) Int Cl.:
***G01S 17/89*** *(2006.01)*    ***G01S 17/10*** *(2006.01)*
***G01S 7/483*** *(2006.01)*    ***G01S 7/487*** *(2006.01)*
***G01S 7/51*** *(2006.01)*

(21) Numéro de dépôt: **09179576.5**

(22) Date de dépôt: **17.12.2009**

(54) **Système d'imagerie passive equipé d'un télémètre**

Passives Bildanzeigesystem, das mit einem Entfernungsmesser ausgestattet ist

Passive imaging system equipped with a telemeter

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807397**

(43) Date de publication de la demande:
**30.06.2010 Bulletin 2010/26**

(73) Titulaire: **Thales**
**92200 Neuilly Sur Seine (FR)**

(72) Inventeurs:
• **Audier, Marcel-Francis**
**75013, PARIS (FR)**

• **Belhaire, Eric**
**94230, CACHAN (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 860 462**    **WO-A-99/34235**
**FR-A- 2 735 935**    **FR-A- 2 915 833**
**US-B1- 6 452 666**

## Description

Le domaine de l'invention est celui de la télémétrie laser par mesure de temps de vol, associée à de l'imagerie passive dans un grand champ d'observation.

Un dispositif de télémétrie d'une cible est souvent associé à un système d'imagerie passive dans un système optronique multi fonctions.

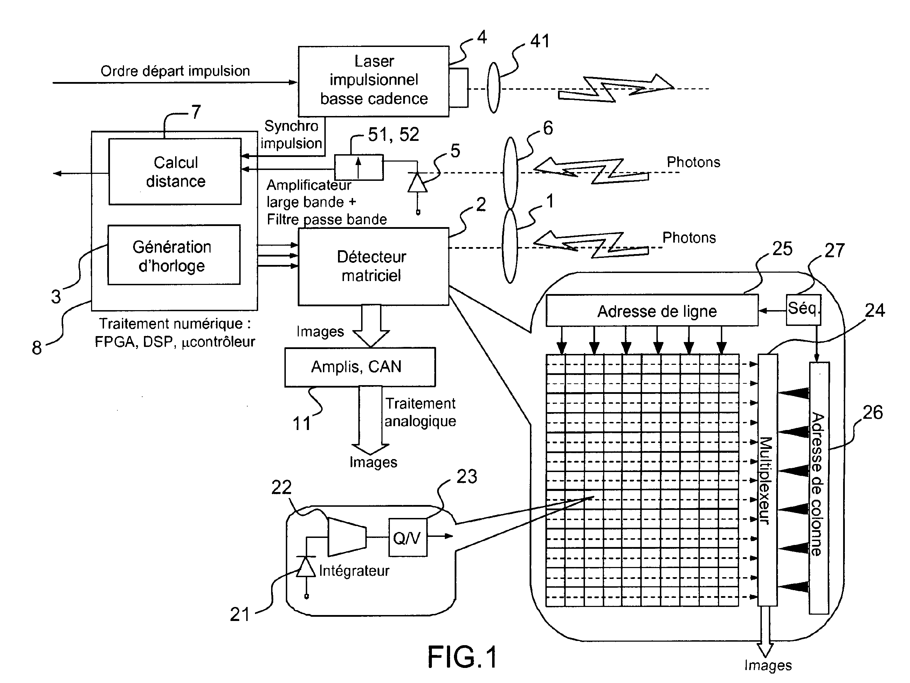

Un exemple d'un tel système optronique multi fonctions est décrit en relation avec la figure 1.

Il comprend pour la partie imagerie passive, une configuration optique de formation d'images sur un détecteur matriciel 2 situé dans le plan focal de cette configuration. On a représenté sur la figure l'optique frontale 1 de cette configuration. Le détecteur matriciel 2 comprend une matrice de transducteurs 21 tels que des photodiodes qui convertissent les photons reçus en électrons proportionnellement à l'éclairement reçu ; ces charges électriques sont ensuite intégrées par les intégrateurs 22 respectivement associés aux transducteurs, et proportionnellement converties en tension par un convertisseur charges-tension 23. Le détecteur comprend en outre un circuit d'adressage en lignes 25, un circuit d'adressage en colonnes 26 et un multiplexeur 24 qui multiplexent tous les signaux issus des convertisseurs 23 et génère un signal vidéo de sortie contenant les informations de luminance du détecteur matriciel (désignées images sur la figure) qui sont amplifiées et converties par des amplificateurs et convertisseurs analogique-numérique 11 en vue de leur traitement ultérieur. Le circuit d'adressage en lignes 25 sélectionne la ligne qui est connectée au multiplexeur. Le circuit d'adressage en colonnes 26 génère les signaux de commande du multiplexeur 24. Le circuit de lecture comprend en outre dans certains cas un circuit séquenceur de lecture 27 qui génère la séquence d'adresse de commande des circuits d'adressages afin d'assurer la lecture complète de l'image. Les intégrateurs, le séquenceur de lecture, les circuits d'adressage et le multiplexeur sont des éléments du circuit de lecture du détecteur matriciel. Les intégrateurs 22 sont commandés par un signal de contrôle émis par un générateur d'horloge 3. Dans certains cas le séquenceur de lecture 27 permet de générer les adresses correspondant à une petite sous-matrice de photodiodes pour limiter la lecture à une seule zone d'intérêt. Les signaux de début et de fin d'intégration, les commandes du séquenceur de lecture ou bien directement les entrées des circuits d'adressage sont générés par le générateur d'horloge 3.

Il comprend pour la partie télémétrie :

- un laser impulsionnel 4 mis en forme par une optique 41, éclairant la cible et dont le signal est en partie rétrodiffusé vers un détecteur de télémétrie 5,
- une optique 6 de grande surface de pupille pour maximiser l'amplitude du signal reçu,
- le détecteur de télémétrie 5, généralement réalisé avec une diode à avalanche silicium ou InGaAs voire CdHgTe (selon la longueur d'onde du laser utilisé) de grande bande passante et de coefficient de multiplication suffisamment élevé pour permettre la détection de très faibles signaux ; un amplificateur large bande 51 et un filtre passe bande 52 sont reliés à la photodiode,
- un module de calcul de distance 7 à partir du signal détecté et du temps écoulé entre le départ de l'impulsion laser (désigné synchro impulsion sur la figure) et la détection dudit signal.

Le générateur d'horloge 3 et le module de calcul de distance 7 sont hébergés dans une unité de traitement numérique 8.

Le champ de réception est supérieur à la couverture de la surface de cible illuminée, pour prendre en compte les défauts d'harmonisation entre les lignes de visée de l'émetteur 4 et du détecteur 2.

Parmi les principaux inconvénients et contraintes limitant la portée de ces dispositifs de télémétrie basés sur la mesure du temps de vol, on peut citer :

- le champ de réception supérieur au champ utile réel qui engendre un bruit photonique dû au fond de scène dégradant le rapport signal utile / bruit et, par suite, la portée,
- les détecteurs à avalanche qui présentent des facteurs de bruit relativement importants (typiquement 5 pour InGaAs et Si),
- les lasers impulsionnels délivrant de fortes énergies par impulsion qui sont lents, encombrants et coûteux.

Un inconvénient supplémentaire s'ajoute à cette liste : la surface de l'optique de réception 6 est souvent limitée par le partage de surface disponible avec les autres optiques dédiées aux fonctions d'imagerie passive (visible et thermique, détection de tache laser pour réaliser de l'écartométrie,....).

Des exemples de dispositif et de procédé de télémétrie d'une cible au moyen d'un laser impulsionnel sont décrits dans les documents EP 1 860 462 et US 6 452 666. Les impulsions rétro diffusées par la cible sont détectées par une matrice d'éléments photo-sensibles associés à des intégrateurs dont les périodes d'intégration peuvent être ajustées.

En conséquence, il demeure à ce jour un besoin pour un système optronique assurant des fonctions de télémétrie et d'imagerie passive donnant simultanément satisfaction à l'ensemble des exigences précitées, en termes de RSB, portée de télémétrie, réduction de l'encombrement et du coût, temps de réaction.

Plus précisément l'invention a pour objet un procédé de télémétrie d'une cible au moyen d'un laser impulsionnel et d'un dispositif de détection des impulsions rétro diffusées par la cible, qui comprend une étape d'émission d'impulsions laser à des instants déterminés et à une fréquence de répétition f. Il est principalement caractérisé en ce que le dispositif de détection comportant un détecteur matriciel qui comprend une matrice de photodiodes associées à des intégrateurs, le procédé comprend les étapes suivantes de localisation grossière puis de localisation fine de la cible. L'étape de localisation grossière comporte les sous-étapes suivantes :

- intégration par les intégrateurs d'une impulsion rétro diffusée, reçue par les photodiodes, sur une fenêtre temporelle de durée F prédéterminée et décalée d'un décalage Déc entre l'instant d'émission de l'impulsion et celui du début de ladite intégration, avec Déc < 1/f et F<1/f,
- comparaison dudit signal intégré à un premier seuil prédéfini,
- tant que le signal est inférieur à ce seuil, les étapes d'intégration et de comparaison sont ré-itérées avec un nouveau décalage Déc de la fenêtre temporelle incrémenté d'environ F par rapport au décalage Déc précédent,
- à l'issue de ces itérations, la cible étant grossièrement localisée dans un intervalle de distance correspondant à la fenêtre temporelle de durée F et décalée du décalage Déc désigné $Déc_g$, l'étape de localisation fine est mise en oeuvre.

Elle comprend les sous-étapes suivantes :

- intégration par les intégrateurs d'une impulsion rétro diffusée, reçue par les photodiodes sur une fenêtre temporelle de durée F' prédéterminée et décalée d'un décalage $Déc_f$ égal à $Déc_g$,
- comparaison dudit signal intégré à un deuxième seuil prédéfini,
- les étapes d'intégration et de comparaison sont ré-itérées avec un nouveau décalage $Déc_f$ de la fenêtre temporelle incrémenté d'un décalage d par rapport au décalage $Déc_f$ précédent, avec d<F' et $Déc_g \leq Déc_f \leq Déc_g +F$, jusqu'à ce que le signal dépasse ce deuxième seuil si le signal est inférieur à ce seuil à la première itération, ou jusqu'à ce que le signal passe en dessous de ce seuil si le signal est supérieur à ce seuil à la première itération, la cible étant localisée à l'issue de ces itérations.

F et Déc sont par exemple déterminés en fonction d'un intervalle de distance dans lequel la cible est susceptible de se situer.

De même, d est déterminé en fonction de la précision de localisation requise.

Il comprend de préférence une sous-étape de post-intégration des signaux reçus avant la sous-étape de comparaison.

Les seuils sont par exemple déterminés en fonction d'un signal minimal estimé de cible.

L'invention a aussi pour objet un système optronique d'imagerie qui comprend un détecteur matriciel et une unité de traitement numérique des images issues du détecteur, caractérisé en ce qu'il comprend un dispositif d'émission d'impulsions laser et en ce que l'unité de traitement comprend des moyens de mise en oeuvre du procédé tel que décrit.

Le détecteur matriciel comprend avantageusement une matrice de photodiodes associées à des intégrateurs et est équipé de circuits d'adressage de lignes et de colonnes de la matrice.

Ce système permet :

- l'utilisation d'un ensemble de détection (optique et détecteur) unique pour les fonctions combinées de télémétrie et d'imagerie,
- d'éviter l'utilisation d'une chaîne électronique d'amplification large bande passante générant un très faible bruit pour la voie de télémétrie,
- la fonctionnement correct de la télémétrie dans des conditions de forte rétrodiffusion de l'atmosphère à proximité du porteur du système,
- l'exploitation, pour des fonctions de télémétrie, de lasers peu coûteux et d'encombrement réduit, délivrant des trains d'impulsions de faible énergie mais de fréquence élevée,
- la combinaison des fonctions d'imagerie passive et de télémétrie de hautes performances par une même optique et un bloc de détection unique.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un système optronique multi fonction selon l'état de la technique ;

un premier zoom sur le détecteur matriciel permet de montrer la matrice de photodiodes et le circuit de lecture et un deuxième zoom sur un élément de cette matrice permet de montrer une photodiode et ses intégrateur et convertisseur associés,

les figures 2 illustrent schématiquement la phase de localisation grossière de la cible (fig 2a) et la phase de localisation fine (fig 2b),

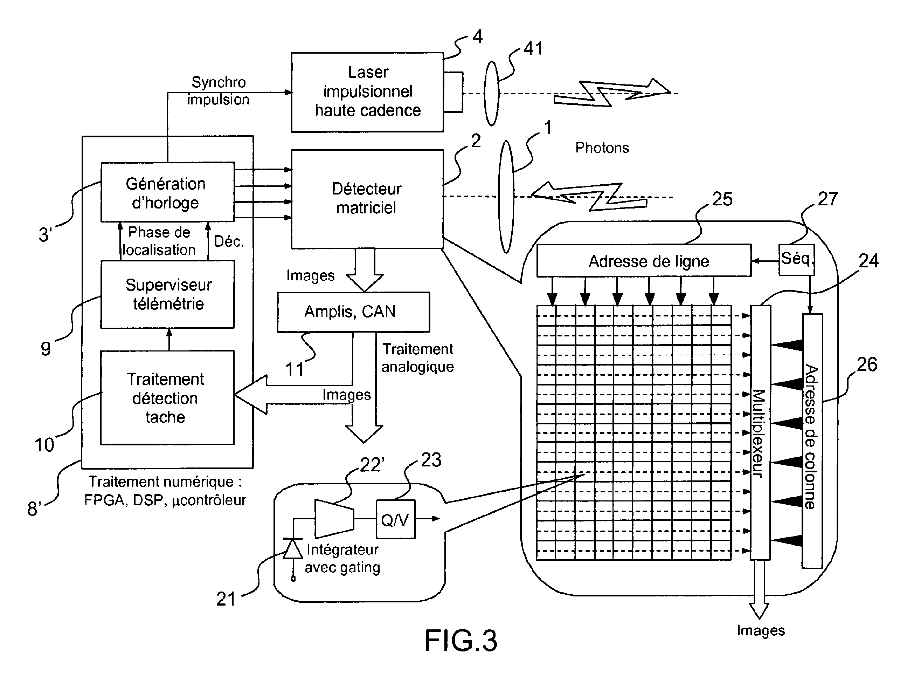

la figure 3 représente schématiquement un système optronique multi fonction selon l'invention,

la figure 4 représente la distance maximale de télémétrie en fonction de la fréquence de répétition du laser.

Selon l'invention, le détecteur matriciel du système d'imagerie est également utilisé à des fins de télémétrie. Le calcul de distance n'est plus obtenu à partir de la mesure du temps écoulé entre le départ d'une impulsion et le retour du signal rétrodiffusé correspondant, mais selon le procédé suivant.

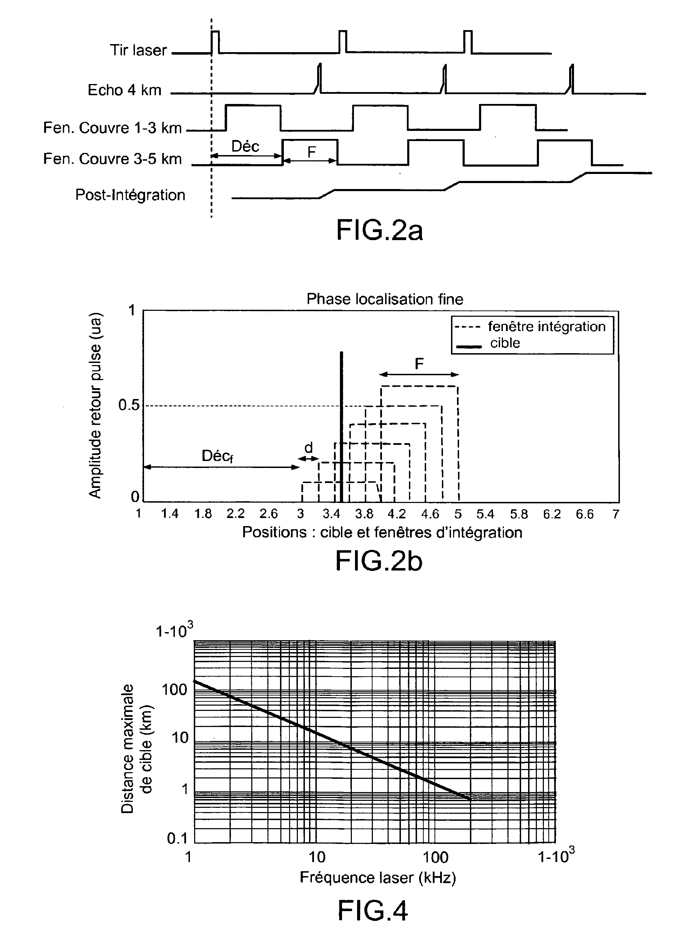

Les figures 2a et 2b illustrent différentes étapes du procédé de télémétrie selon l'invention. Celui-ci se fonde sur une première phase de localisation grossière mais rapide de la position d'une cible, suivie d'une phase de localisation plus fine.

La phase de localisation grossière de la cible comprend les étapes suivantes :

- émission d'impulsions laser d'une largeur de l'ordre de 10 ns par exemple, à des instants déterminés par le système. La fréquence de répétition f est inférieure à une fréquence limite de manière à éviter l'apparition de chevauchement entre les impulsions émises et reçues. Cette fréquence limite est donc calculée en fonction de la portée maximale de télémétrie illustrée figure 4. Elle est typiquement supérieure à 20 kHz qui correspond à une portée de 10 km.
- Intégration sur des fenêtres temporelles de dimension déterminée F, à une fréquence égale à celle de l'émission ; on a F<1/f. Plusieurs fenêtres d'intégration sont de préférence ouvertes en synchronisme avec l'arrivée des impulsions rétro-diffusées du laser, celles-ci étant post-intégrées dans le circuit de lecture. La dimension de la fenêtre temporelle F est déterminée par l'intervalle de distance correspondant désigné Dis dans laquelle la cible pourrait se situer ; en outre cet intervalle de distance est positionné à partir d'une distance d'origine O déterminée par le décalage Déc entre l'instant d'émission de l'impulsion et celui du début de l'intégration ; on a Déc<1/f. Finalement à une fenêtre d'intégration de durée F et de décalage Déc déterminés, correspond la position de départ O d'un intervalle de distance Dis. Par exemple, une fenêtre d'intégration de 13,4 $\mu$s couvre un intervalle de distance de 2 km et un décalage de 20 $\mu$s correspond à une position de départ située à 3 km : ainsi cette fenêtre d'intégration couvre une distance comprise entre 3 et 5 km. Selon la position de l'écho, celui-ci coïncide ou non avec cet intervalle de distance. Si la cible est située dans cet intervalle, à 4 km par exemple, l'écho est intégré et donc détecté c'est-à-dire que la cible est grossièrement localisée entre 3 et 5 km ; il est en fait post-intégré au fur et à mesure des fenêtres d'intégration comme illustré sur la figure. Mais s'il est situé en-dehors, par exemple à 6 km, il n'est pas détecté.
- Si l'écho n'est pas détecté c'est-à-dire s'il est inférieur à un seuil prédéterminé, le processus est ré-itéré mais la fenêtre d'intégration est décalée de F (nouveau Déc = Déc précédent +F) pour couvrir l'intervalle suivant dont la position de départ O est alors située à 5 km, c'est-à-dire pour couvrir la distance Dis comprise entre 5 et 7 km. Pour être sûr qu'il n'y aura pas de discontinuité avec l'intervalle suivant, on prévoit un léger recouvrement entre deux fenêtres consécutives : la fenêtre est de préférence décalée de F-δF, avec par exemple δF de l'ordre d'environ 1 % de F. Ainsi de suite jusqu'à ce que la cible soit grossièrement localisée.

Une fois cette localisation grossière réalisée, la phase de localisation fine est mise en oeuvre. Connaissant à présent l'intervalle de distance et sa position O, la phase suivante vise à préciser la position de la cible dans cet intervalle.

On désigne par fenêtre « grossière » la fenêtre résultant de l'étape de localisation grossière et décalée d'un décalage désigné $Déc_g$. Au cours de l'étape de localisation fine, la fenêtre temporelle est décalée à l'intérieur de cette fenêtre temporelle « grossière » de décalages successifs $Déc_f$. Ces décalages successifs $Déc_f$ sont tels que :

$$\text{nouveau } Déc_f = Déc_f \text{ précédent} + d.$$

Sa durée F' est égale à F ou est éventuellement inférieure d'une part pour ne pas intégrer des photons qui viennent d'une partie non analysée de la scène, d'autre part pour optimiser la durée totale de la télémétrie. La position de la cible est déterminée par ces décalages successifs. En effet l'écho apparaît (c'est-à-dire lorsqu'il est supérieur à un seuil prédéterminé), sur un nombre limité de fenêtres et disparaît dès que le retard d est supérieur au temps de vol de l'impulsion, c'est-à-dire au fur et à mesure que ces fenêtres sont décalées à l'intérieur de la fenêtre « grossière ». On a :

$$Déc_g \leq Déc_f \leq Déc_g + F.$$

La précision de la localisation est déterminée par ces décalages d : la connaissance de la distance est acquise avec la précision définie par l'incrément du retard d, soit 1.5m par 10ns.

A une fenêtre temporelle F de 6,68 $\mu$s correspond un intervalle de 1 km, et à un décalage d de 1,33 $\mu$s correspond une avancée de 200 m sur le terrain ; dans cet exemple 5 décalages sont suffisants pour couvrir un intervalle de 1 km avec une précision de 200 m.

Dans l'exemple de la figure 2, il résulte de la phase grossière que la cible est située entre 3 et 5 km et on a choisi une durée F de fenêtre temporelle de 6,67 $\mu$s correspondant à un intervalle de 1 km, et des décalages temporels de 1,33 $\mu$s correspondant à des décalages de distance de 200 m. La cible étant située à 3,5 km, son écho apparaît et est détecté sur les 3 premières fenêtres puis disparaît à partir de la 4è fenêtre : la cible est donc située entre 3,4 et 3,6 km.

Selon l'invention, le dispositif d'imagerie et le dispositif de télémétrie ont un ensemble de détection commun. Le détecteur de télémétrie 5, l'amplificateur et filtre associés 51, 52 et l'optique associée 6 décrits en préambule deviennent inutiles ; le module de calcul de distance 7 tel que décrit en préambule est remplacé par un module de mise en oeuvre du procédé itératif décrit précédemment, hébergé par l'unité de traitement numérique 8'. Cet ensemble de détection commun procure un gain en sensibilité par maximisation de la taille de l'optique 1.

Pour être en mesure d'assurer une fonction de télémétrie telle que décrite précédemment, l'unité de traitement d'images 8' comprend en plus des moyens classiques de l'imagerie décrits en préambule, un module 10 de traitement de détection de tache qui reçoit les images détectées pour, par comparaison à un seuil donné, déterminer la présence ou l'absence d'un signal laser rétrodiffusé par une cible (écho) et des moyens 9 de supervision de la télémétrie. Les moyens 9 de supervision de la télémétrie indiquent au générateur d'horloge 3', la phase de localisation grossière ou fine ainsi que le décalage Déc ou Déc$_f$ à appliquer. Le générateur d'horloge 3' émet des signaux de contrôle spécifiques de la télémétrie en plus des signaux de contrôle propres à l'imagerie. Ces signaux spécifiques sont : signal de départ de l'impulsion destiné au laser 4, signal de connexion ou déconnexion d'une photodiode 21 à son intégrateur 22' en vue de réaliser la post-intégration et pour réaliser une fonction de « gating ».

Aux fins de télémétrie également le détecteur matriciel 2 selon l'invention a les caractéristiques suivantes :

- la matrice de photodiodes (de 256 lignes x 320 colonnes par exemple) est réalisée sur un matériau semi-conducteur dont le gabarit spectral est adapté à l'imagerie passive ainsi qu'aux longueurs d'onde de l'illumination laser. On peut citer à titre d'exemple de tels matériaux :

    - le silicium adapté pour détecter un faisceau laser ayant une longueur d'onde comprise entre 0,4 $\mu$m et 1,1 $\mu$m,
    - le CdHgTe adapté pour détecter un faisceau laser ayant une longueur d'onde comprise entre 0,4 $\mu$m et 15 $\mu$m,
    - l'InGaAs adapté pour détecter un faisceau laser ayant une longueur d'onde comprise entre 0,4 $\mu$m et 2,5 $\mu$m,

- la capacité d'intégration de chaque intégrateur du circuit de lecture est dimensionnée en taille pour les contraintes de l'imagerie passive et chaque intégrateur 22' dispose pour la télémétrie des ressources nécessaires (des arrangements de transistors) pour ouvrir des fenêtres temporelles d'intégration très courtes (quelques 10 ns à quelques 10 $\mu$s) en vue d'assurer une fonction de « gating » et de post-intégrer les signaux reçus ;
- en outre ce même circuit de lecture permet :

    - un contrôle précis du retard (ou décalage) Déc ou Déc$_f$ entre l'émission de l'impulsion laser et le début de l'intégration du signal rétrodiffusé correspondant, par l'intermédiaire des signaux numériques de contrôle émis par le générateur d'horloge 3' ;
    - une post-intégration sur plusieurs fenêtres d'intégration de plusieurs impulsions rétro-diffusées grâce à la déconnexion/reconnexion de la photodiode 21 à l'intégrateur 22', commandée par l'intermédiaire des signaux numériques de contrôle émis par le générateur d'horloge 3' ; cela offre la possibilité d'utiliser des lasers 4 de faible puissance par impulsion et fonctionnant à des fréquences élevées ;
    - de préférence, un fenêtrage aléatoire en taille et position de la matrice de détection par l'intermédiaire d'un adressage sélectif des lignes et colonnes de la matrice, qui offre la possibilité de sélectionner en mode actif, une petite sous-matrice de photodiodes. Cela permet de limiter la lecture à une seule zone d'intérêt en augmentant la fréquence de répétition des impulsions laser jusqu'à des fréquences très élevées, par exemple supérieures à 20 kHz. L'utilisation d'une matrice de détection, capable d'imagerie passive classique, divise le champ total d'observation en un grand nombre de petits champs élémentaires, égal au nombre de transducteurs de la matrice. Pour un champ d'observation donné, si ce champ élémentaire est très réduit, le bruit photonique généré devient quasi-négligeable permettant ainsi la détection de signaux de très faibles amplitudes, compatible d'une fonction de détection d'une tache laser éloignée. L'exploitation d'une petite partie de la matrice (quelques dizaines de pixels) permet une lecture rapide de trames de tailles réduites (en 50$\mu$s à 100$\mu$s). Cette petite partie de la matrice a néanmoins une taille supérieure à celle d'une photodiode de télémètre classique : il en résulte une forte réduction des contraintes d'harmonisation entre les voies d'émission et de réception du télémètre.

A raison de la lecture de la seule petite zone d'intérêt de la matrice (par exemple : 32 colonnes x 10 lignes), l'information distance peut être acquise en quelques ms.

Ce fenêtrage spatial présente les avantages suivants :

- un gain de sensibilité en détection de tache laser et de télémétrie par la minimisation du bruit photonique de fond,
- une simplification du respect des normes sur la sécurité oculaire,
- un gain en sensibilité par réduction de la bande passante, et donc du bruit, de l'électronique associée.

## Revendications

1. Procédé de télémétrie d'une cible au moyen d'un laser impulsionnel (4) et d'un dispositif de détection des impulsions rétro diffusées par la cible, comportant un détecteur matriciel (2) équipé d'une matrice de photodiodes (21) associées à des intégrateurs (22'), le procédé comprenant une étape d'émission d'impulsions laser à des instants déterminés et à une fréquence de répétition f, et des étapes de localisation grossière puis de localisation fine de la cible, l'étape de localisation grossière comportant la sous-étape suivante :

    - intégration par les intégrateurs (22') d'une impulsion rétro diffusée, reçue par les photodiodes (21) sur une fenêtre temporelle de durée F prédéterminée et décalée d'un décalage Déc entre l'instant d'émission de l'impulsion et celui du début de ladite intégration,
    **caractérisé en ce que** Déc < 1/f, et F < 1/f, et **en ce que** l'étape de localisation grossière comprend en outre les sous-étapes suivantes :
    - comparaison dudit signal intégré à un premier seuil prédéfini,
    - tant que le signal est inférieur à ce seuil, les étapes d'intégration et de comparaison sont ré-itérées avec un nouveau décalage Déc de la fenêtre temporelle incrémenté d'environ F par rapport au décalage Déc précédent,
    - à l'issue de ces itérations, la cible étant grossièrement localisée dans un intervalle de distance correspondant à la fenêtre temporelle de durée F et décalée du décalage Déc désigné $Déc_g$, l'étape de localisation fine est mise en oeuvre, qui comprend les sous-étapes suivantes :
    - intégration par les intégrateurs (22') d'une impulsion rétro diffusée reçue par les photodiodes (21) sur une fenêtre temporelle de durée F' prédéterminée et décalée d'un décalage $Déc_f$ égal à $Déc_g$,
    - comparaison dudit signal intégré à un deuxième seuil prédéfini,
    - les étapes d'intégration et de comparaison sont ré-itérées avec un nouveau décalage $Déc_f$ de la fenêtre temporelle incrémenté d'un décalage d par rapport au décalage $Déc_f$ précédent, avec d<F' et $Déc_g \leq Déc_f \leq Déc_g$ +F, jusqu'à ce que le signal dépasse ce deuxième seuil si le signal est inférieur à ce seuil à la première itération, ou jusqu'à ce que le signal passe en dessous de ce seuil si le signal est supérieur à ce seuil à la première itération, la cible étant localisée à l'issue de ces itérations.

2. Procédé de télémétrie d'une cible selon la revendication précédente, **caractérisé en ce que** F et Déc sont déterminés en fonction d'un intervalle de distance dans lequel la cible est susceptible de se situer.

3. Procédé de télémétrie d'une cible selon l'une des revendications précédentes, **caractérisé en ce que** d est déterminé en fonction de la précision de localisation requise.

4. Procédé de télémétrie d'une cible selon l'une des revendications précédentes, **caractérisé en ce que** F'≤F.

5. Procédé de télémétrie d'une cible selon l'une des revendications précédentes, **caractérisé en ce qu'**il comprend une sous-étape de post-intégration des impulsions reçues avant la sous-étape de comparaison.

6. Procédé de télémétrie d'une cible selon l'une des revendications précédentes, **caractérisé en ce que** les seuils sont déterminés en fonction d'un signal minimal estimé de cible et du nombre de post-intégrations éventuelles.

7. Système optronique d'imagerie qui comprend un détecteur matriciel (2) équipé d'une matrice de photodiodes (21) associées à des intégrateurs (22'), et une unité de traitement numérique (8') des images issues du détecteur, **caractérisé en ce qu'**il comprend un dispositif d'émission d'impulsions laser (4) et **en ce que** l'unité de traitement (8') comprend des moyens (10, 9, 3') de mise en oeuvre du procédé selon l'une des revendications précédentes.

8. Système optronique d'imagerie selon la revendication précédente, **caractérisé en ce que** le détecteur matriciel (2) comprend une matrice de photodiodes (21) associées à des intégrateurs (22') et est équipé de circuits d'adressage de lignes (25) et de colonnes (26) de la matrice.

**Claims**

1. A method for finding the range of a target by means of a pulsed laser (4) and a device for detecting pulses backscattered by the target, comprising a matrix detector (2) fitted with a matrix of photodiodes (21) associated with integrators (22'), the method comprising a step of emitting laser pulses at determined instants and at a repetition frequency f, and steps of approximately localising and then precisely localising the target, said step of approximately localising comprising the following sub-step:

   - integrating a backscattered pulse using the integrators (22'), which backscattered pulse is received by the photodiodes (21) over a time window of a predetermined duration F and is offset by an offset Déc between the emitting instant of the pulse and the instant of the start of said integration,
   **characterised in that** Déc < 1/f, and F < 1/f, and **in that** the step of approximately localising further comprises the following sub-steps:
   - comparing said integrated signal with a first predefined threshold,
   - repeating the steps of integrating and comparing, as long as the signal is below this threshold, with a new offset Déc of the time window incremented by approximately F relative to the preceding offset Déc,
   - on completion of these reiterations, with the target being approximately located within a distance interval that corresponds to the time window of duration F and offset Déc by the offset Déc, designated $Déc_g$, the step of precise localising is implemented, which step comprises the following sub-steps:
   - integrating a backscattered pulse using the integrators (22'), which backscattered pulse is received by the photodiodes (21) over a time window of a predetermined duration F' and offset by an offset $Déc_f$ that is equal to $Déc_g$,
   - comparing said integrated signal with a second predefined threshold,
   - the steps of integrating and comparing are repeated with a new offset $Déc_f$ of the time window incremented by an offset d relative to the preceding offset $Déc_f$, with d<F' and $Déc_g \leq Déc_f \leq Déc_g + F$, until the signal exceeds this second threshold if the signal is less than this threshold on the first reiteration or until this signal goes below this threshold if the signal is greater than this threshold on the first reiteration, the target being located on completion of these reiterations.

2. The target range finding method according to the preceding claim, **characterised in that** F and Déc are determined as a function of a distance interval within which the target is likely to be located.

3. The target range finding method according to any one of the preceding claims, **characterised in that** d is determined as a function of the required precision of the localisation.

4. The target range finding method according to any ane of the preceding claims, **characterised in that** F'≤F.

5. The target range finding method according to any one of the preceding claims, **characterised in that** it comprises a sub-step of post-integration of the received pulses before the comparison sub-step.

6. The target range finding method according to any one of the preceding claims, **characterised in that** the thresholds are determined as a function of a minimum estimated target signal and of the number of any post-integrations.

7. An optronic imaging system that comprises a matrix detector (2) fitted with a matrix of photodiodes (21) associated with integrators (22'), and a unit (8') for digitally processing images coming from the detector, **characterised in that** it comprises a device for emitting laser pulses (4) and **in that** the processing unit (8') comprises means (10, 9, 3') for implementing the method according to any one of the preceding claims.

8. The optronic imaging system according to the preceding claim, **characterised in that** the matrix detector (2) comprises a matrix of photodiodes (21) associated with integrators (22') and is fitted with circuits for addressing rows (25) and columns (26) of the matrix.

**Patentansprüche**

1. Verfahren zum Messen der Entfernung eines Ziels mittels eines Impulslasers (4) und einer Vorrichtung zum Detektieren von von dem Ziel zurückgestreuten Impulsen, umfassend einen Matrixdetektor (2), der mit einer Matrix von mit Integratoren (22') assoziierten Fotodioden (21) ausgestattet ist, wobei das Verfahren einen Schritt des Sendens von Laserimpulsen zu bestimmten Zeitpunkten und mit einer Wiederholfrequenz f sowie Schritte zum groben Orten und dann feinen Orten des Ziels beinhaltet, wobei der Schritt des groben Ortens die folgenden Unterschritte beinhaltet:

   - Integrieren, durch die Integratoren (22'), eines von den Fotodioden (21) empfangenen zurückgestreuten Impulses auf einem Zeitfenster der vorbestimmten Dauer F, die um einen Versatz Déc zwischen dem Zeitpunkt des Sendens des Impulses und dem des Anfangs der Integration versetzt ist,
   - **dadurch gekennzeichnet, dass** Déc < 1/f und F < 1/f ist, und dadurch, dass der Schritt des groben Ortens darüber hinaus die folgenden Unterschritte beinhaltet:
   - Vergleichen des integrierten Signals mit einem ersten vordefinierten Schwellenwert,
   - Wiederholen, solange das Signal kleiner als dieser Schwellenwert ist, der Integrations- und Vergleichsschritte mit einem neuen Versatz Déc des Zeitfensters, das etwa um F in Bezug auf den vorherigen Versatz Déc inkrementiert ist,
   - Durchführen nach diesen Wiederholungen, an dem in einem Distanzintervall grob georteten Ziel, das dem Zeitfenster der Dauer F versetzt um den Versatz Déc entspricht, $Déc_g$ genannt, des Feinortungsschrittes, der die folgenden Unterschritte beinhaltet:
   - Integrieren, durch die Integratoren (22'), eines von den Fotodioden (21) empfangenen zurückgestreuten Impulses auf einem Zeitfenster der vorbestimmen Dauer F', um einen Versatz $Déc_f$ von gleich $Déc_g$ versetzt,
   - Vergleichen des integrierten Signals mit einem zweiten vordefinierten Schwellenwert,
   - Wiederholen der Integrations- und Vergleichsschritte mit einem neuen Versatz $Déc_f$ des Zeitfensters, inkrementiert um einen Versatz d in Bezug auf den vorherigen Versatz $Déc_f$, wobei d<F' und $Déc_g \leq Déc_f \leq Déc_g + F$, bis das Signal diesen zweiten Schwellenwert passiert, wenn das Signal an diesem Schwellenwert kleiner ist als die erste Iteration, oder bis das Signal unter diesen Schwellenwert abfällt, wenn das Signal bei diesem Schwellenwert größer ist als die erste Iteration, wobei das Ziel am Ausgang dieser Wiederholungen geortet wird.

2. Verfahren zum Messen der Entfernung eines Ziels nach dem vorherigen Anspruch, **dadurch gekennzeichnet, dass** F und Déc in Abhängigkeit von einem Distanzintervall ermittelt werden, in dem sich das Ziel wahrscheinlich befinden kann.

3. Verfahren zum Messen der Entfernung eines Ziels nach einem der vorherigen Ansprüche, **dadurch gekennzeichnet, dass** d in Abhängigkeit von der benötigten Ortungspräzision bestimmt wird.

4. Verfahren zum Messen der Entfernung eines Ziels nach einem der vorherigen Ansprüche, **dadurch gekennzeichnet, dass** F' $\leq$ F ist.

5. Verfahren zum Messen der Entfernung eines Ziels nach einem der vorherigen Ansprüche, **dadurch gekennzeichnet, dass** es einen Unterschritt des Nachintegrierens der empfangenen Impulse vor dem Unterschritt des Vergleichens beinhaltet.

6. Verfahren zum Messen der Entfernung eines Ziels nach einem der vorherigen Ansprüche, **dadurch gekennzeichnet, dass** die Schwellenwerte in Abhängigkeit von einem minimalen geschätzten Signal des Ziels und der Anzahl der eventuellen Nachintegrationen bestimmt wird.

7. Optronisches Bildgebungssystem, das einen Matrixdetektor (2) umfasst, der mit einer Matrix von mit Integratoren (22') assoziierten Fotodioden (21) und einer digitalen Einheit (8') zum Verarbeiten von Bildern von dem Detektor ausgestattet ist, **dadurch gekennzeichnet, dass** er eine Laserimpulssendevorrichtung (4) umfasst und dadurch, dass die Verarbeitungseinheit (8') Mittel (10, 9, 3') zum Ausführen des Verfahrens nach einem der vorherigen Ansprüche umfasst.

8. Optronisches Bildgebungssystem nach dem vorherigen Anspruch, **dadurch gekennzeichnet, dass** der Matrixdetektor (2) eine Matrix von mit Integratoren (22') assoziierten Fotodioden (21) umfasst und mit Schaltungen zum Adressieren von Reihen (25) und Spalten (26) der Matrix ausgestattet ist.

FIG.1

FIG.2a

FIG.2b

FIG.4

FIG.3

**RÉFÉRENCES CITÉES DANS LA DESCRIPTION**

**Documents brevets cités dans la description**

- EP 1860462 A

- US 6452666 B